# EUROPEAN PATENT SPECIFICATION

(11) **EP 3 944 101 B1**
(45) Date of publication and mention of the grant of the patent: **10.01.2024**
(21) Application number: 19921112.9
(22) Date of filing: 22.03.2019
(51) Int. Cl.: G06F 16/27, G06F 16/23, G06F 11/14

(54) **INFORMATION PROCESSING PROGRAM, INFORMATION PROCESSING METHOD, AND INFORMATION PROCESSING DEVICE**
INFORMATIONSVERARBEITUNGSPROGRAMM, -VERFAHREN UND -VORRICHTUNG
PROGRAMME DE TRAITEMENT D'INFORMATIONS, PROCÉDÉ DE TRAITEMENT D'INFORMATIONS ET DISPOSITIF DE TRAITEMENT D'INFORMATIONS

(43) Date of publication of application: 26.01.2022
(73) Proprietor: FUJITSU LIMITED, Kanagawa 211-8588 (JP)
(72) Inventor: MINAGI, Riho, Kawasaki-shi, Kanagawa 211-8588 (JP)
(74) Representative: Hoffmann Eitle
(86) International application number: PCT/JP2019/012218
(87) International publication number: WO 2020/194403

(56) References cited:
- JP-A- 2014 089 646
- JP-A- 2016 515 271
- US-A1- 2010 161 564
- UEDA, Masaru et al.: "The Application Design Patterns for Utilizing XMLDB", ProVISION, no. 59, 31 October 2008 (2008-10-31), pages 79-85, XP009530302, JP

## Description

### FIELD

The present invention relates to an information processing program, an information processing method, and an information processing apparatus.

### BACKGROUND

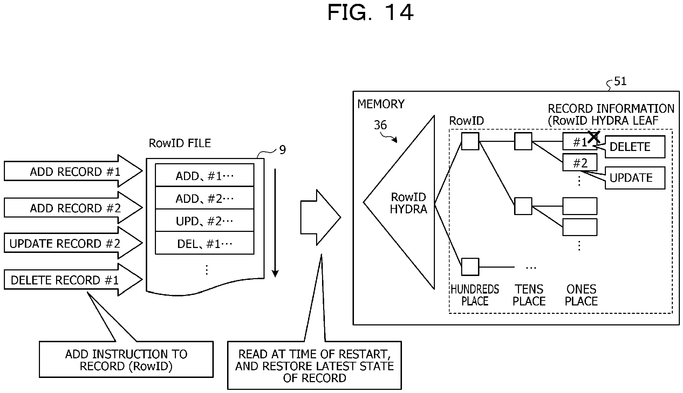

A database that stores data such as extensible markup language (XML) data as records holds a RowID file that records operations on the records. FIG. 14 is a diagram for explaining the RowID file. As illustrated in FIG. 14, when an operation of adding, updating, or deleting a record is performed, operation information is added to a RowID file 9. The operation information includes an instruction classification, a RowID, and a physical position of a record. The instruction classification is "addition (ADD)", "update (UPD)" or "deletion (DEL)". The RowID is an identifier that identifies an operation. The physical position of a record is information regarding a physical storage position where the record is stored in a hard disk drive (HDD) or a solid state drive (SSD).

The RowID file 9 is used to restore, when a database is restarted, a RowID hydra 36 that holds the latest state of each record on a memory 51. The RowID hydra 36 is tree-structured data related to a RowID, and a leaf portion of the tree is called a RowID hydra leaf, and stores record information including a physical position of a record. The RowID hydra 36 is used to acquire a physical position of a record from a RowID.

For example, when it is assumed that a RowID is a number from 000 to 999 and that the RowID hydra 36 has three hierarchies excluding a root, a first hierarchy includes ten nodes corresponding to 0 to 9 of the hundreds-place numeral of the RowID. A second hierarchy includes a total of 100 nodes corresponding to 0 to 9 of the tens-place numeral of the RowID for each node of the first hierarchy. A third hierarchy, for example, a leaf hierarchy includes a total of 1000 nodes corresponding to 0 to 9 of the ones-place numeral of the RowID for each node of the second hierarchy. Note that details of the RowID hydra 36 are described in Japanese Laid-open Patent Publication No. 2003-44267.

In the example of the RowID file 9 illustrated in FIG. 14, a record with a RowID of "#1" and a record with a RowID of "#2" are added to the database, the record with the RowID of "#2" is updated, and the record with the RowID of "#1" is deleted. When the RowID file 9 is read at the time of restart, RowID hydra leaves that store information regarding the record with the RowID of "#1" and information regarding the record with the RowID of "#2" are created in the RowID hydra 36. Then, the RowID hydra leaf that stores the information regarding the record with the RowID of "#2" is updated, and the RowID hydra leaf that stores the information regarding the record with the RowID of "#1" is deleted.

Note that there is a prior art in which time series data at a desired time point is automatically held in the same database file, when unnecessary time series data is deleted from a database file that stores updated data according to time series each time data with the same origin from the past to the present is updated. The prior art system includes a database file, a database management system, and a database management information input/output device. The database management system manages a series of operations on the database file, including data retrieval, data update, and data deletion. The database management information input/output device specifies and instructs the database management system to update optional latest data and delete optional data among the updated data stored according to time series.

Furthermore, as a prior art, there is a database management processing method that includes a safe log area, a buffer area, a database storage area, a database access unit, a commit record collection unit, and a buffer control unit, and is suitable for historical data accumulation processing. The safe log area stores a log of an additional record. The buffer area stores a committed record. The database storage area is provided on a secondary storage. The database access unit collects, when a record is added, log data of the record in the safe log area. The commit record collection unit fetches committed log data from the safe log area, and stores the committed log data in the buffer area. The buffer control unit writes contents of the buffer area to the database storage area asynchronously with transaction processing. In addition, the database management processing method performs disclosure of an additional record by transferring to the buffer area.

US 2010/0161564 A1 discloses a method for data recovery using parallel processing in a cluster data management system. The method includes arranging a redo log written by a failed partition server, dividing the arranged redo log by columns of the partition, and recovering data parallelly on the basis of the divided redo log and multiple processing unit.

### SUMMARY

### TECHNICAL PROBLEM

As the number of pieces of data to be stored increases, retrieval performance deteriorates and resource usage increases in a method of retrieving all pieces of data. Thus, a partitioning function is needed in which data is classified and stored in a database, and a retrieval object is narrowed down by using the classification at the time of retrieval.

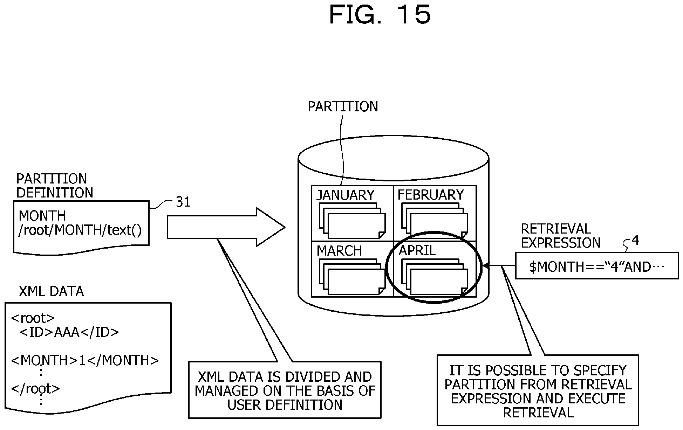

FIG. 15 is a diagram for explaining the partitioning function. FIG. 15 illustrates a case where XML data is stored in a database. A user defines a partition by using a partition definition. In FIG. 15, the XML data is divided and managed by using a /root/month tag. For example, the XML data is divided into data in which <month> is "1", data in which <month> is "2",..., and data in which <month> is "12" and managed.

A partition is specified in retrieval. In FIG. 15, it is specified by a retrieval expression 4 that <month> is "4". The database management system may specify a partition from the retrieval expression 4 and execute retrieval within a range of the specified partition.

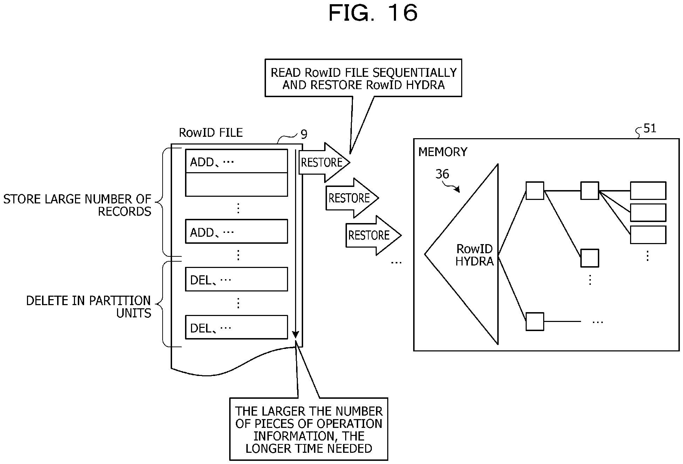

However, even if the partitioning function is provided, there is a problem that when the number of pieces of data increases, it takes time to restore the RowID hydra 36 at the time of restart, and it takes time to perform restart. FIG. 16 illustrates restoration of the RowID hydra 36. As illustrated in FIG. 16, the database management system reads the RowID file 9 sequentially, and restores the RowID hydra 36. Thus, in a case where a large number of records are stored in a database by addition, it takes time to restore the RowID hydra 36. In particular, in a case where the partitioning function is provided, operations of operating a large number of records at one time by deletion or movement in partition units increase, and the number of pieces of operation information of the RowID file 9 increases.

In one aspect, an object of the present invention is to shorten restoration time of a RowID hydra 36 and improve restart performance.

### SOLUTION TO PROBLEM

The present invention provides an information processing program, in accordance with claim 1.

The present invention also provides a computer-implemented method, in accordance with claim 5.

The present invention also provides an information processing apparatus, in accordance with claim 8.

### ADVANTAGEOUS EFFECTS OF INVENTION

In one aspect, the present invention may shorten restoration time of a RowID hydra 36 and improve restart performance.

### BRIEF DESCRIPTION OF DRAWINGS

FIG. 1 is a diagram for explaining a RowID file managed by a database management system according to an embodiment;
FIG. 2 is a diagram for explaining restoration of a RowID hydra by the database management system according to the embodiment;
FIG. 3 illustrates a configuration of the database management system according to the embodiment;
FIG. 4 is a flowchart illustrating a flow of processing by an operation unit;
FIG. 5 is a flowchart illustrating a flow of processing by a restoration unit;
FIG. 6 illustrates an example of record addition processing;
FIG. 7 illustrates an example of record update processing;
FIG. 8 illustrates an example of record deletion processing;
FIG. 9 illustrates an example of partition deletion processing;
FIG. 10A illustrates restoration of the RowID hydra by using operation information of an addition instruction;
FIG. 10B illustrates reflection of operation information of an update instruction in the RowID hydra;
FIG. 10C illustrates reflection of operation information of a deletion instruction in the RowID hydra;
FIG. 11A illustrates an example of registration data;
FIG. 11B illustrates update of a record #1;
FIG. 11C illustrates update of a record #2;
FIG. 11D illustrates deletion of a Tokyo partition;
FIG. 12A illustrates restoration processing using the operation information of the addition instruction;
FIG. 12B is a first diagram illustrating restoration processing using operation information of an update instruction of the record #1;
FIG. 12C is a second diagram illustrating the restoration processing using the operation information of the update instruction of the record #1;
FIG. 12D is a first diagram illustrating restoration processing using operation information of an update instruction of the record #2;
FIG. 12E is a second diagram illustrating the restoration processing using the operation information of the update instruction of the record #2;
FIG. 13 illustrates a hardware configuration of a computer that executes a management program according to the embodiment;
FIG. 14 is a diagram for explaining the RowID file;
FIG. 15 is a diagram for explaining a partitioning function; and
FIG. 16 illustrates restoration of the RowID hydra.

### DESCRIPTION OF EMBODIMENTS

Hereinafter, embodiments of an information processing program, an information processing method, and an information processing apparatus disclosed in the present application will be described in detail with reference to the drawings.

### [Embodiments]

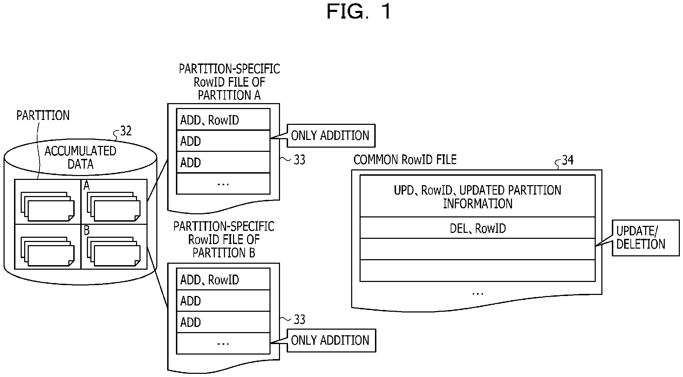

First, a RowID file managed by a database management system according to an embodiment will be described. FIG. 1 is a diagram for explaining the RowID file managed by the database management system according to the embodiment. As illustrated in FIG. 1, the database management system according to the embodiment manages accumulated data 32 by dividing the accumulated data 32 into partitions, and has a partition-specific RowID file 33 associated with each partition.

The database management system according to the embodiment stores, for an addition instruction, operation information in the partition-specific RowID file 33. For example, operation information of an addition instruction of a record included in a partition A is stored in a partition-specific RowID file 33 of the partition A. Operation information of an addition instruction of a record included in a partition B is stored in a partition-specific RowID file 33 of the partition B.

Furthermore, the database management system according to the embodiment has a common RowID file 34, and stores, for an update instruction and a deletion instruction, operation information in the common RowID file 34. Furthermore, the database management system according to the embodiment includes, for the update instruction, updated partition information in the operation information as a belonging partition. Note that processing of controlling update of a RowID hydra 36 by using the belonging partition will be described later.

At the time of restart, the database management system according to the embodiment restores the RowID hydra 36 in parallel on the basis of the partition-specific RowID file 33, and then updates the RowID hydra 36 on the basis of the common RowID file 34.

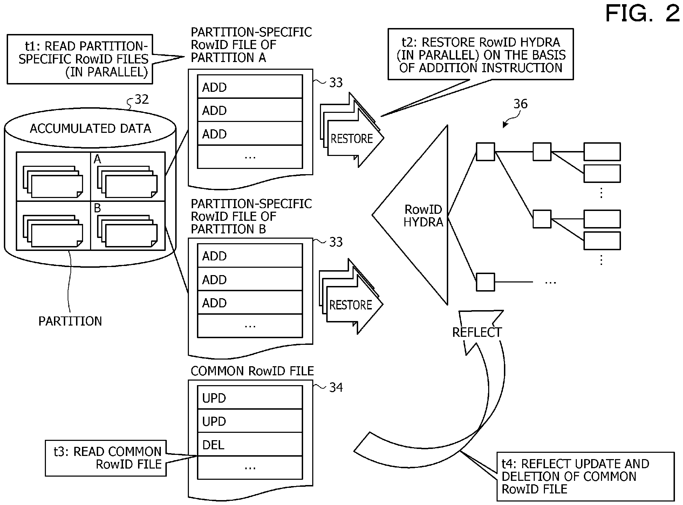

FIG. 2 is a diagram for explaining restoration of the RowID hydra 36 by the database management system according to the invention. As illustrated in FIG. 2, the database management system according to the invention reads the partition-specific RowID files 33 in parallel (t1), and restores the RowID hydra 36 in parallel on the basis of an addition instruction (t2). For example, a thread for performing processing of reading the partition-specific RowID file 33 and restoring the RowID hydra 36 is generated for each partition and executed in a multi-core CPU, whereby restoration of the RowID hydra 36 in parallel is implemented. Then, the database management system according to the invention reads the common RowID file 34 (t3) and reflects update and deletion in the RowID hydra 36 (t4).

In this way, by storing only operation information of addition instructions that are not in order in the partition-specific RowID file 33, the database management system according to the invention restores the RowID hydra 36 based on the plurality of partition-specific RowID files 33 in parallel. Thus, the database management system according to the invention shorten restoration time of the RowID hydra 36.

Furthermore, in a case where records are deleted in partition units, the database management system according to the invention eliminates operation information of an addition instruction and deletion instruction by deleting the partition-specific RowID file 33 corresponding to the partition. Thus, the database management system according to the invnetion reduces the number of pieces of operation information and shorten the restoration time of the RowID hydra 36.

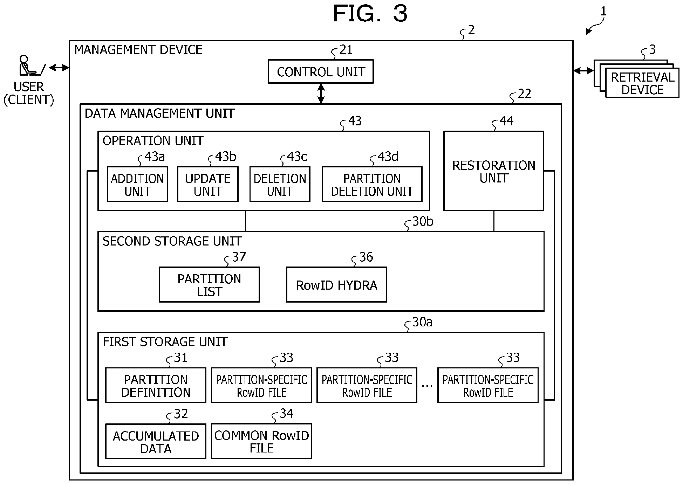

Next, a configuration of the database management system according to the embodiment will be described. FIG. 3 illustrates the configuration of the database management system according to the embodiment. As illustrated in FIG. 3, a database management system 1 according to the embodiment includes a management device 2 and three retrieval devices 3. Note that the database management system 1 may have a number of the retrieval devices 3 other than three as long as the number is one or more.

The management device 2 is an information processing apparatus that receives an operation request, a retrieval request, or the like from a user, performs processing corresponding thereto, and notifies the user of a processing result. The retrieval device 3 creates a list of RowIDs that satisfy a retrieval condition included in the retrieval request on the basis of an instruction of the management device 2, and responds to the management device 2. The three retrieval devices 3 perform processing in parallel. The management device 2 retrieves the accumulated data 32 by using the lists of the RowIDs received from the retrieval devices 3, and responds to the user.

The management device 2 includes a control unit 21 and a data management unit 22. The control unit 21 receives an operation request, a retrieval request, or the like from a user, controls processing for the received request, and notifies the user of a processing result.

The data management unit 22 process an operation request, a retrieval request, or the like received by the control unit 21. The data management unit 22 includes a first storage unit 30a (may be referred to as a first storage unit 30), a second storage unit 30b (may be referred to as a second storage unit 40), an operation unit 43, and a restoration unit 44.

The first storage unit 30a stores a partition definition 31, the accumulated data 32, partition-specific RowID files 33 corresponding to the number of partitions, and the common RowID file 34. The accumulated data 32 is divided into partitions and managed. The first storage unit 30a is provided in a non-volatile storage device such as an HDD or SSD.

The second storage unit 30b stores the RowID hydra 36 and a partition list 37. The partition list 37 is information regarding partitions. The second storage unit 30b is provided on a memory 51.

The operation unit 43 processes an operation request. The operation unit 43 includes an addition unit 43a, an update unit 43b, a deletion unit 43c, and a partition deletion unit 43d.

The addition unit 43a determines a partition of a record to be added, assigns a RowID, and stores the record in the first storage unit 30a. The record stored in the first storage unit 30a is managed as the accumulated data 32. Furthermore, the addition unit 43a writes operation information to the partition-specific RowID file 33 of the determined partition. Furthermore, the addition unit 43a adds information regarding the record stored in the first storage unit 30a to the RowID hydra 36.

The update unit 43b determines a partition to which a record to be updated belongs, and stores the update record in the first storage unit 30a. Note that the record before the update is deleted from the first storage unit 30a at another timing. Furthermore, the update unit 43b writes operation information to the common RowID file 34. At that time, the update unit 43b includes information regarding the belonging partition in the operation information. Furthermore, the update unit 43b updates the RowID hydra 36 with information regarding the update record stored in the first storage unit 30a.

The deletion unit 43c writes operation information to the common RowID file 34. Furthermore, the deletion unit 43c deletes information regarding a deletion record from the RowID hydra 36. Note that the deletion record is deleted from the first storage unit 30a at another timing.

The partition deletion unit 43d deletes a partition specified in a partition deletion request from the accumulated data 32, and deletes a corresponding partition-specific RowID file 33. Furthermore, the partition deletion unit 43d deletes a corresponding portion in the RowID hydra 36.

The restoration unit 44 restores the RowID hydra 36 when a database is restarted. First, the restoration unit 44 executes processing of reading the partition-specific RowID file 33 and creating the RowID hydra 36 in parallel for each partition.

Then, the restoration unit 44 reads the common RowID file 34, and in the case of an update instruction, processing is performed on the RowID hydra 36 on the basis of presence or absence of a RowID hydra leaf of a record to be updated and presence or absence of a partition to which the record to be updated belongs.

Specifically, in a case where there is a RowID hydra leaf of a record to be updated and there is a partition to which the record to be updated belongs, the restoration unit 44 updates the RowID hydra leaf. In a case where there is the RowID hydra leaf of the record to be updated and there is no partition to which the record to be updated belongs, the restoration unit 44 deletes the RowID hydra leaf from the RowID hydra 36. In a case where there is no RowID hydra leaf of the record to be updated and there is the partition to which the record to be updated belongs, the restoration unit 44 adds a RowID hydra leaf to the RowID hydra 36. In a case where there is no RowID hydra leaf of the record to be updated and there is no partition to which the record to be updated belongs, the restoration unit 44 does not perform processing on the RowID hydra 36.

Note that the restoration unit 44 determines the presence or absence of the partition to which the record to be updated belongs by using a belonging partition included in operation information.

In the case of a deletion instruction, the restoration unit 44 deletes a RowID hydra leaf of a record to be deleted from the RowID hydra 36.

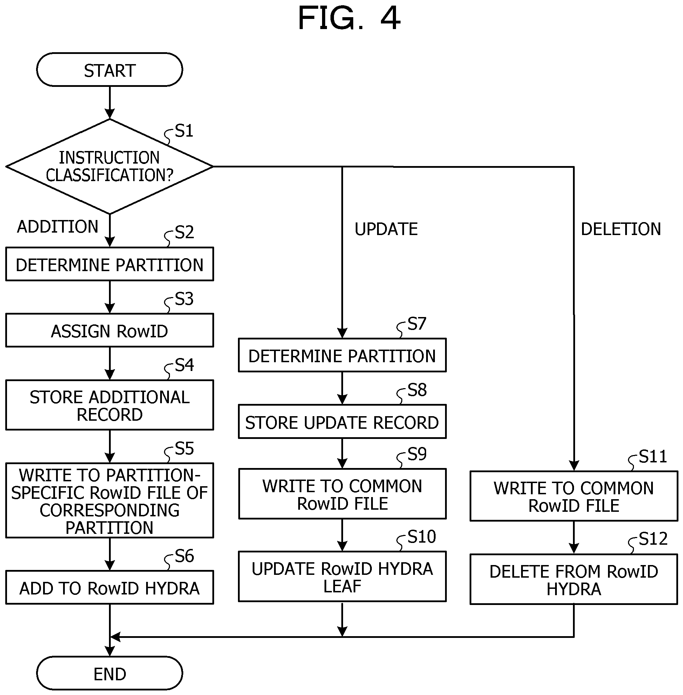

Next, a flow of processing by the operation unit 43 will be described. FIG. 4 is a flowchart illustrating the flow of the processing by the operation unit 43. As illustrated in FIG. 4, the operation unit 43 determines an instruction classification of an operation request (Step S1).

Then, in a case where the instruction classification is "addition", the operation unit 43 determines a partition to which a record to be added belongs (Step S2), and assigns a RowID to the record to be added (Step S3). Then, the operation unit 43 stores the record to be added on the basis of the determined partition (Step S4), and writes operation information to the partition-specific RowID file 33 of the corresponding partition (Step S5). Then, the operation unit 43 adds a RowID hydra leaf of the record to be added to the RowID hydra 36 (Step S6).

Furthermore, in a case where the instruction classification is "update", the operation unit 43 determines a partition to which a record to be updated belongs (Step S7), and stores the record to be updated on the basis of the determined partition (Step S8). Then, the operation unit 43 writes operation information to the common RowID file 34 (Step S9), and updates a RowID hydra leaf with information regarding the record to be updated (Step S10).

Furthermore, in a case where the instruction classification is "deletion", the operation unit 43 writes operation information to the common RowID file 34 (Step S11), and deletes a RowID hydra leaf of a record to be deleted from the RowID hydra 36 (Step S12).

In this way, in the case where the instruction classification is "addition", the operation unit 43 writes the operation information to the partition-specific RowID file 33 of the partition to which the record to be added belongs. Thus, the restoration unit 44 may restore the RowID hydra 36 regarding the addition instruction in parallel for each partition.

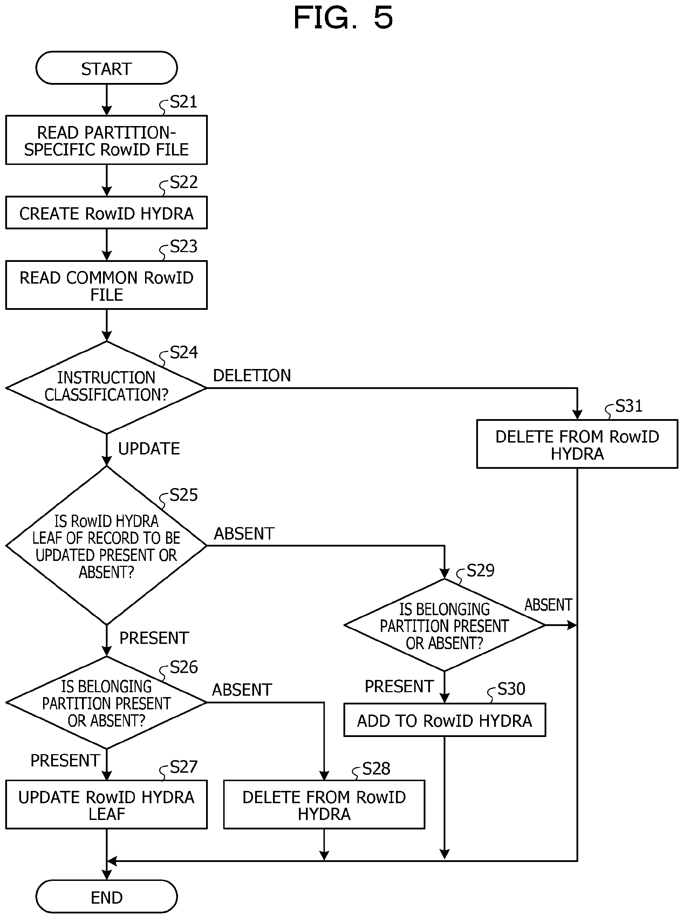

Next, a flow of processing by the restoration unit 44 will be described. FIG. 5 is a flowchart illustrating the flow of the processing by the restoration unit 44. As illustrated in FIG. 5, the restoration unit 44 reads the partition-specific RowID file 33 (Step S21), and creates the RowID hydra 36 (Step S22). The restoration unit 44 creates the RowID hydra 36 by performing the processing of Steps S21 and S22 in parallel for each partition.

Then, the restoration unit 44 reads the common RowID file 34 (Step S23), and performs the following processing of Steps S24 to S31 on each piece of operation information. The restoration unit 44 determines an instruction classification included in operation information (Step S24), and in a case where the instruction classification is "update", determines presence or absence of a RowID hydra leaf of a record to be updated (Step S25).

Then, in a case where the RowID hydra leaf of the record to be updated is present, the restoration unit 44 determines presence or absence of a belonging partition of the record to be updated (Step S26). Then, in a case where the belonging partition of the record to be updated is present, the restoration unit 44 updates the RowID hydra leaf (Step S27), and in a case where the belonging partition is absent, deletes the RowID hydra leaf from the RowID hydra 36 (Step S28).

On the other hand, in a case where the RowID hydra leaf of the record to be updated is absent, the restoration unit 44 determines presence or absence of the belonging partition of the record to be updated (Step S29). Then, in a case where the belonging partition of the record to be updated is present, the restoration unit 44 adds the RowID hydra leaf to the RowID hydra 36 (Step S30), and in a case where the belonging partition is absent, performs no processing on the RowID hydra 36.

Furthermore, in Step S24, in a case where the instruction classification is "deletion", the restoration unit 44 deletes a RowID hydra leaf of a record to be deleted from the RowID hydra 36 (Step S31).

In this way, by performing the processing of reading the partition-specific RowID file 33 and creating the RowID hydra 36 in parallel for each partition, the restoration unit 44 may shorten the restoration time of the RowID hydra 36.

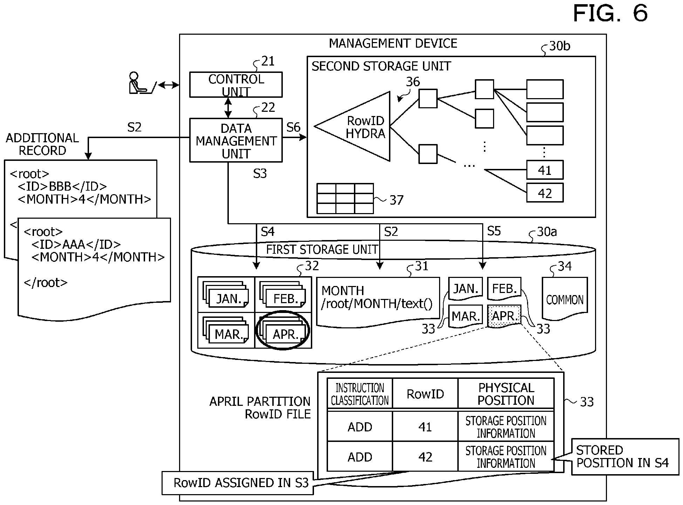

Next, examples of processing by the data management unit 22 will be described with reference to FIGs. 6 to 12E. Note that, in FIGs. 6 to 8, 10A to 10C, and 12A to 12E, S2, S3, and the like indicate steps of the flowchart illustrated in FIGs. 4 and 5.

FIG. 6 illustrates an example of record addition processing. As illustrated in FIG. 6, the data management unit 22 determines a storage destination partition on the basis of the partition definition 31 specified in advance by a user and records to be added (Step S2). Here, since a /root/month tag value is "4" in the additional records, the storage destination partition is determined to be an April partition.

Then, the data management unit 22 assigns RowIDs to the additional records (Step S3). Here, "41" and "42" are assigned. Then, the data management unit 22 reads the additional records and stores the additional records in the April partition of the accumulated data 32 (Step S4).

Then, the data management unit 22 writes "ADD" as an instruction classification, "41" as the RowID, and storage position information of the storage destination as a physical position in the partition-specific RowID file 33 of the April partition. Furthermore, the data management unit 22 writes "ADD" as the instruction classification, "42" as the RowID, and storage position information of the storage destination as the physical position in the partition-specific RowID file 33 of the April partition (Step S5). Then, the data management unit 22 adds RowID hydra leaves (information regarding the additional records) to the RowID hydra 36 on the second storage unit 30b (Step S6).

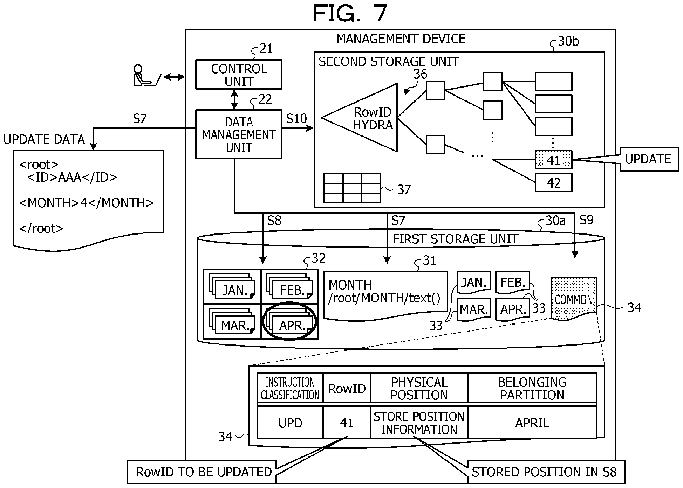

FIG. 7 illustrates an example of record update processing. As illustrated in FIG. 7, the data management unit 22 determines a storage destination partition on the basis of the partition definition 31 specified in advance by a user and an update record (Step S7). Here, since a /root/month tag value is "4", the storage destination partition is determined to be the April partition. Then, the data management unit 22 reads the update record and stores the update record in the April partition of the accumulated data 32 (Step S8).

Then, the data management unit 22 writes "UPD" as the instruction classification, "41" as the RowID, storage position information of the storage destination as the physical position, and "April" as a belonging partition after the update in the common RowID file 34 (Step S9). Then, the data management unit 22 updates a RowID hydra leaf corresponding to the update record of the RowID hydra 36 of the second storage unit 30b with information regarding the update record (Step S10). Here, since the RowID of the record with the /root/ID tag value of "AAA" is "41", a RowID hydra leaf with the RowID of "41" is updated.

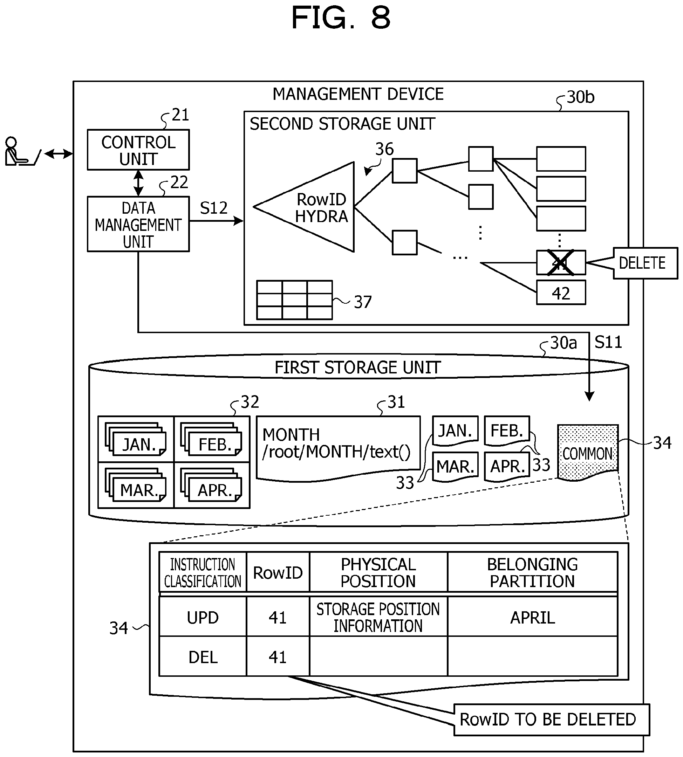

FIG. 8 illustrates an example of record deletion processing. As illustrated in FIG. 8, the data management unit 22 writes "DEL" as the instruction classification and "41" as the RowID in the common RowID file 34 (Step S11). Then, the data management unit 22 deletes a RowID hydra leaf corresponding to a deletion record from the RowID hydra 36 of the second storage unit 30b (Step S12).

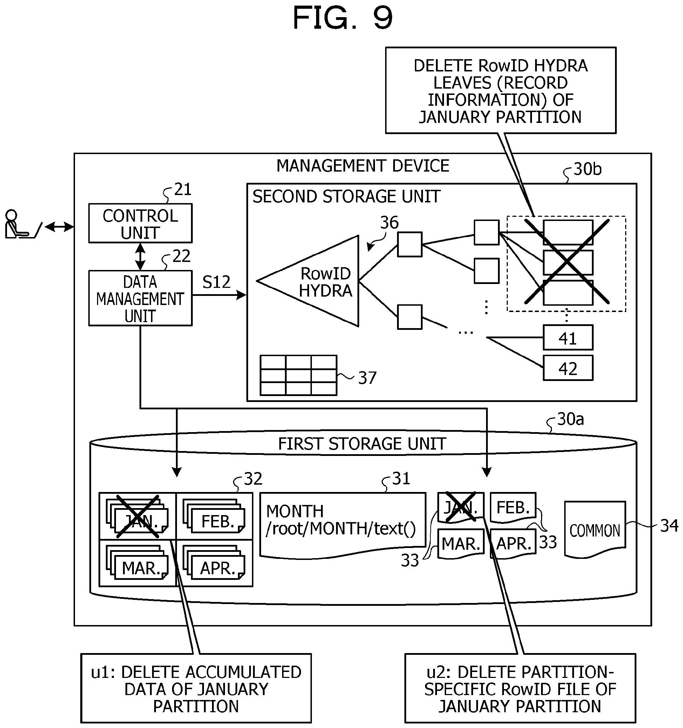

FIG. 9 illustrates an example of partition deletion processing. As illustrated in FIG. 9, when the data management unit 22 is instructed to delete a January partition, the data management unit 22 deletes the accumulated data 32 of the January partition (u1), and deletes the partition-specific RowID file 33 of the January partition (u2). Then, the data management unit 22 deletes RowID hydra leaves of the January partition (u3).

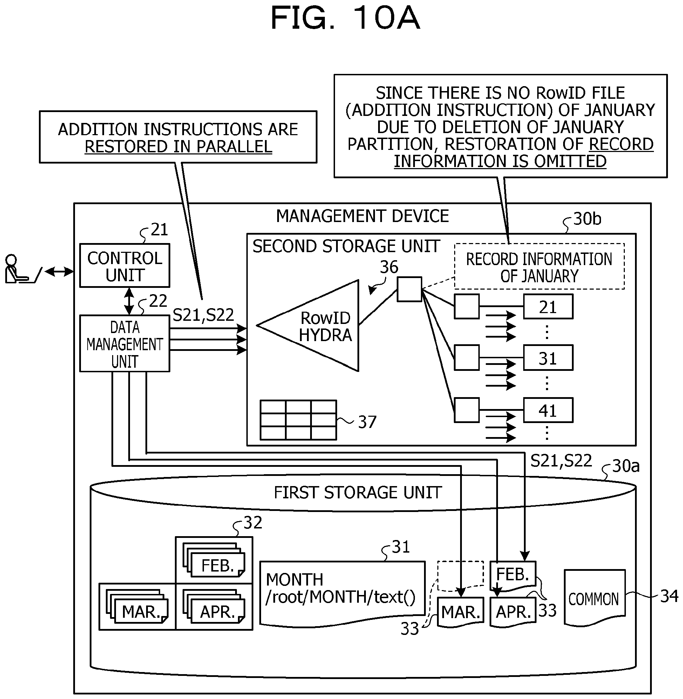

FIGs. 10A to 10C illustrate an example of processing of restoring the RowID hydra 36 at the time of restart. FIG. 10A illustrates restoration of the RowID hydra 36 by using operation information of an addition instruction. As illustrated in FIG. 10A, the data management unit 22 reads the partition-specific RowID files 33 of February, March, and April (Step S21), and creates the RowID hydra 36 (Step S22). At this time, the data management unit 22 restores the RowID hydra 36 in parallel for each partition. Furthermore, as illustrated in FIG. 9, since the January partition has been deleted, there is no partition-specific RowID file 33 of January, and record information of January is not restored in the RowID hydra 36.

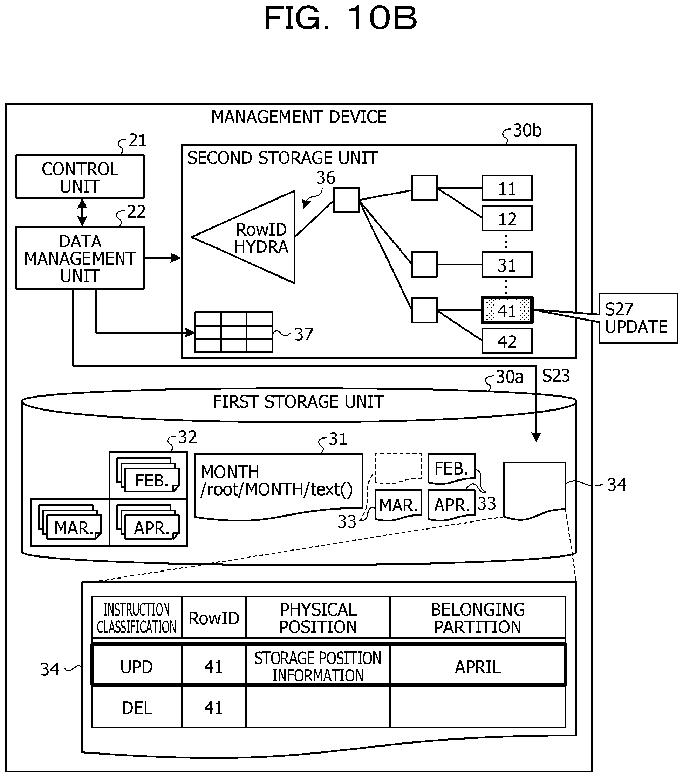

FIG. 10B illustrates reflection of operation information of an update instruction in the RowID hydra 36. As illustrated in FIG. 10B, the data management unit 22 reads the common RowID file 34 (Step S23), and performs update processing because the instruction classification of a first piece of the operation information is "UPD". For example, the data management unit 22 updates a RowID hydra leaf for the record with the RowID of "41" because the record has the RowID hydra leaf and has "April" as the belonging partition (Step S27).

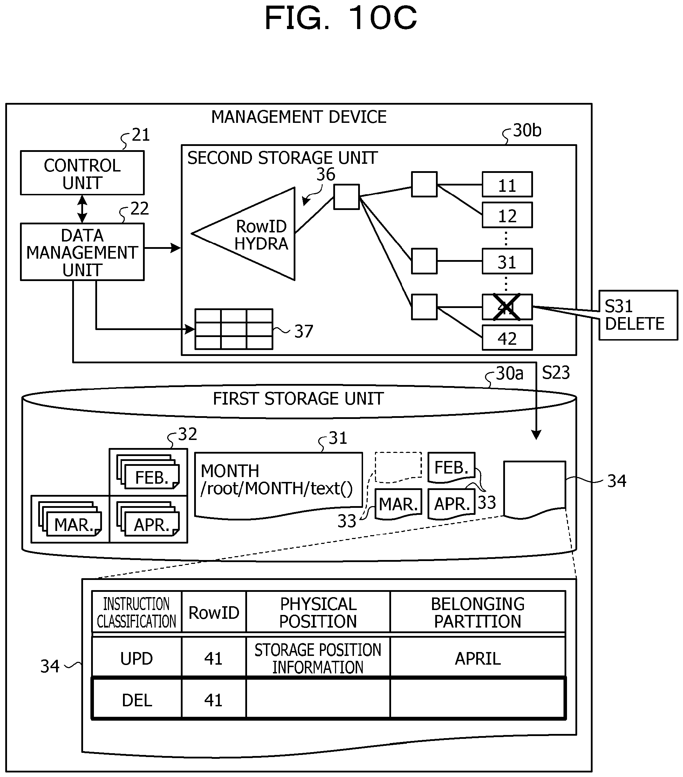

FIG. 10C illustrates reflection of operation information of a deletion instruction in the RowID hydra 36. As illustrated in FIG. 10C, the data management unit 22 reads the common RowID file 34 (Step S23), and performs deletion processing because the instruction classification of the next piece of the operation information is "DEL". For example, the data management unit 22 deletes a RowID hydra leaf with the RowID of "41" from the RowID hydra 36 (Step S31).

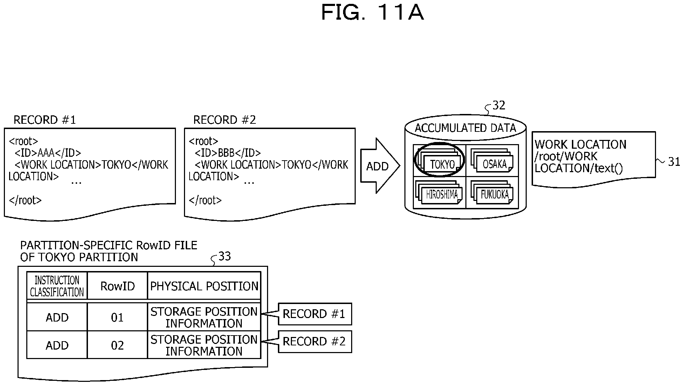

FIGs. 11A to 11D illustrate update examples accompanied by partition movement. FIG. 11A illustrates an example of registration data. As illustrated in FIG. 11A, when a record #1 and a record #2 are added to employee data partitioned by a work location, the record #1 and the record #2 are stored in a Tokyo partition of the accumulated data 32. Furthermore, in the partition-specific RowID file 33 of the Tokyo partition, two pieces of operation information with the instruction classifications of "ADD" and the RowIDs of "01" and "02" are stored.

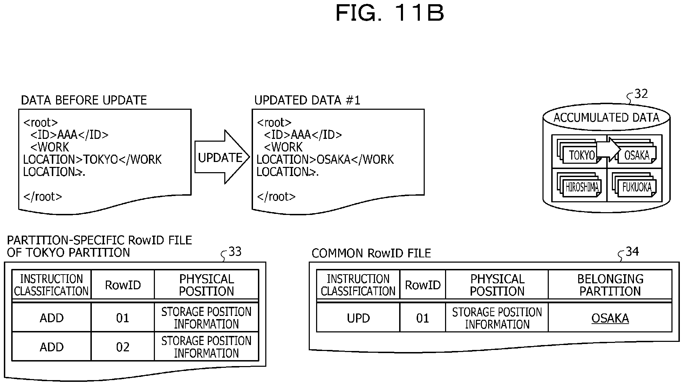

FIG. 11B illustrates update of the record #1. As illustrated in FIG. 11B, when the work location of the record #1 is changed from "Tokyo" to "Osaka", the record #1 is moved from the Tokyo partition of the accumulated data 32 to an Osaka partition. Furthermore, in the common RowID file 34, operation information with the instruction classification of "UPD", the RowID of "01", and the belonging partition of "Osaka" is stored.

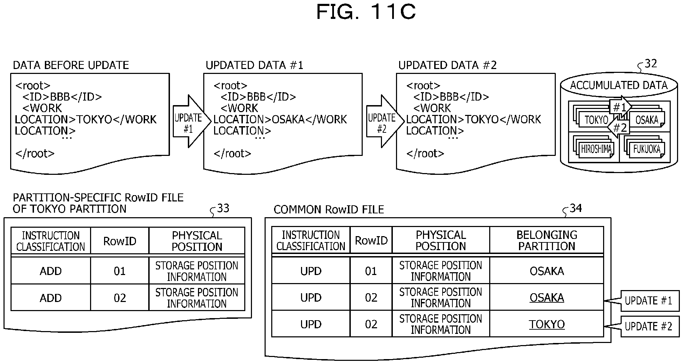

FIG. 11C illustrates update of the record #2. As illustrated in FIG. 11C, the work location of the record #2 is changed from "Tokyo" to "Osaka" and then from "Osaka" to "Tokyo". Then, the record #2 is moved from the Tokyo partition of the accumulated data 32 to the Osaka partition, and then moved from the Osaka partition to the Tokyo partition. Furthermore, in the common RowID file 34, operation information with the instruction classification of "UPD", the RowID of "02", and the belonging partition of "Osaka", and operation information with the instruction classification of "UPD", the RowID of "02", and the belonging partition of "Tokyo" are stored.

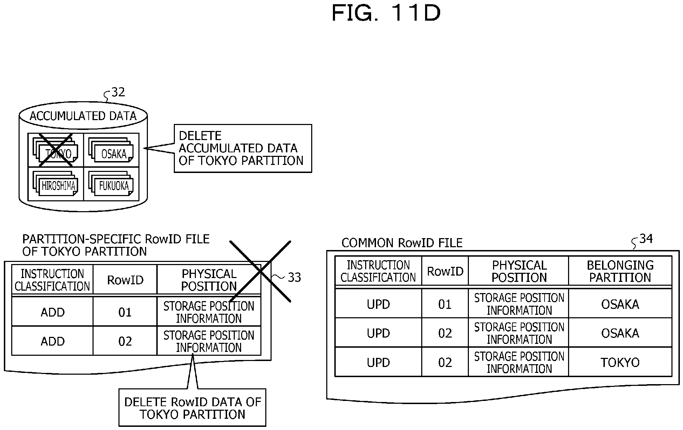

FIG. 11D illustrates deletion of the Tokyo partition. As illustrated in FIG. 11D, when the Tokyo partition is deleted, the accumulated data 32 of the Tokyo partition is deleted, and the partition-specific RowID file 33 of the Tokyo partition is deleted.

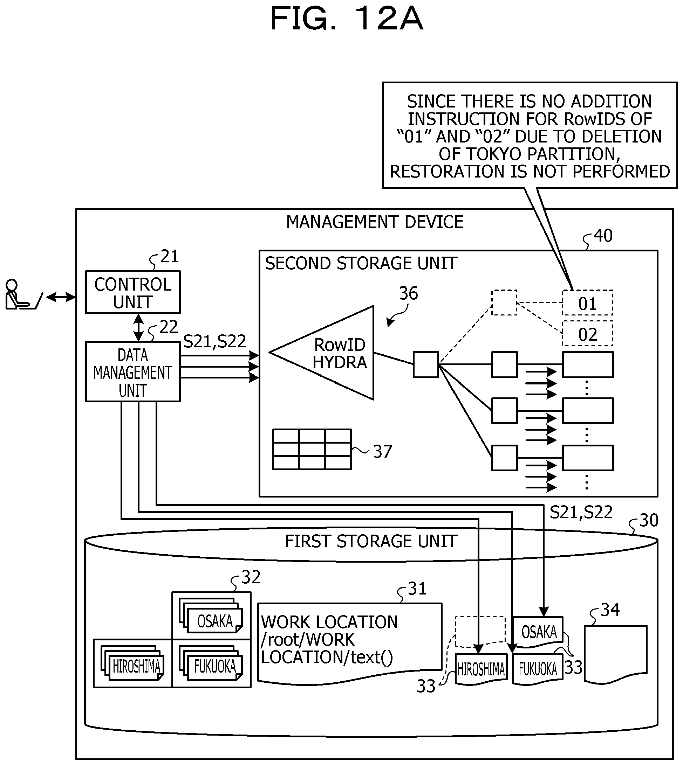

FIGs. 12A to 12E illustrate restoration processing of the RowID hydra 36 in cases where the update illustrated in FIGs. 11A to 11D is performed. FIG. 12A illustrates restoration processing using operation information of an addition instruction. As illustrated in FIG. 12A, the data management unit 22 reads the partition-specific RowID file 33 (Step S21). Note that, since the partition-specific RowID file 33 of the Tokyo partition has been deleted, the data management unit 22 does not restore RowID hydra leaves for the records with the RowIDs of "01" and "02".

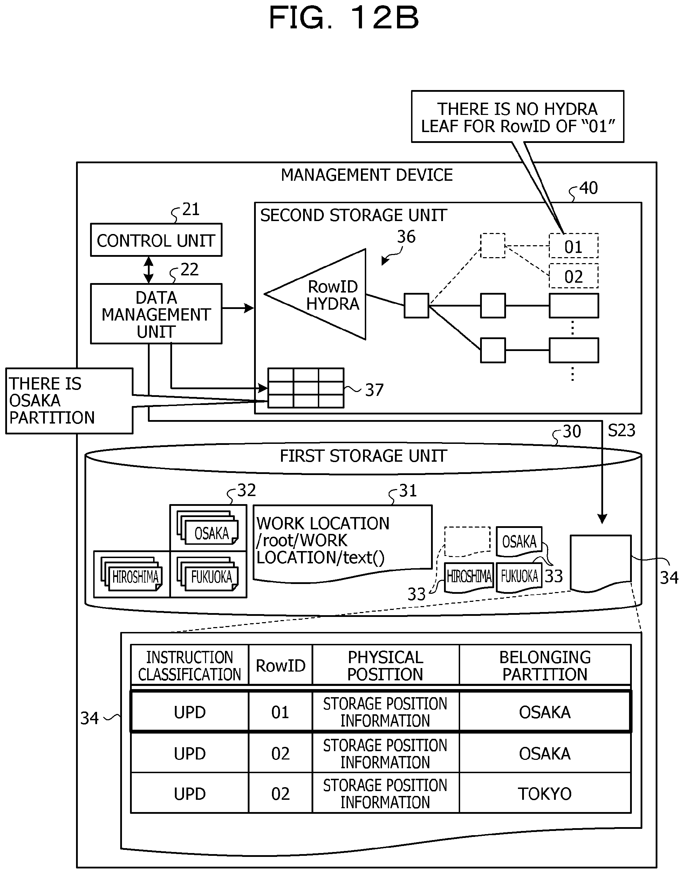

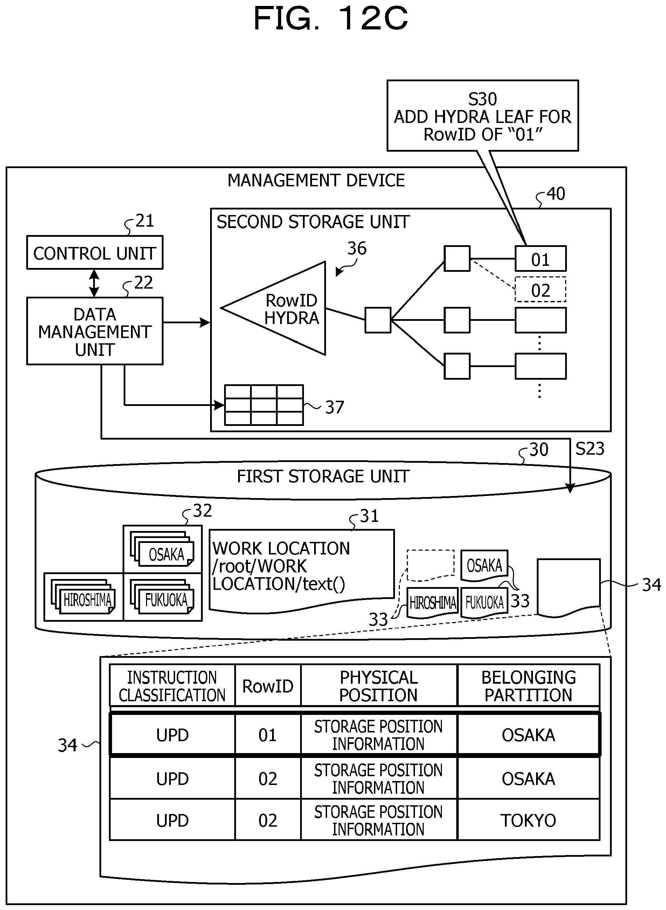

FIGs. 12B and 12C illustrate restoration processing using operation information of an update instruction of the record #1. As illustrated in FIG. 12B, the data management unit 22 reads the common RowID file 34 (Step S23), and performs update processing because the instruction classification of the first piece of the operation information is "UPD". For example, as illustrated in FIG. 12C, the data management unit 22 adds a RowID hydra leaf for the record with the RowID of "01" because the record has no RowID hydra leaf and has "Osaka" as the belonging partition (Step S30).

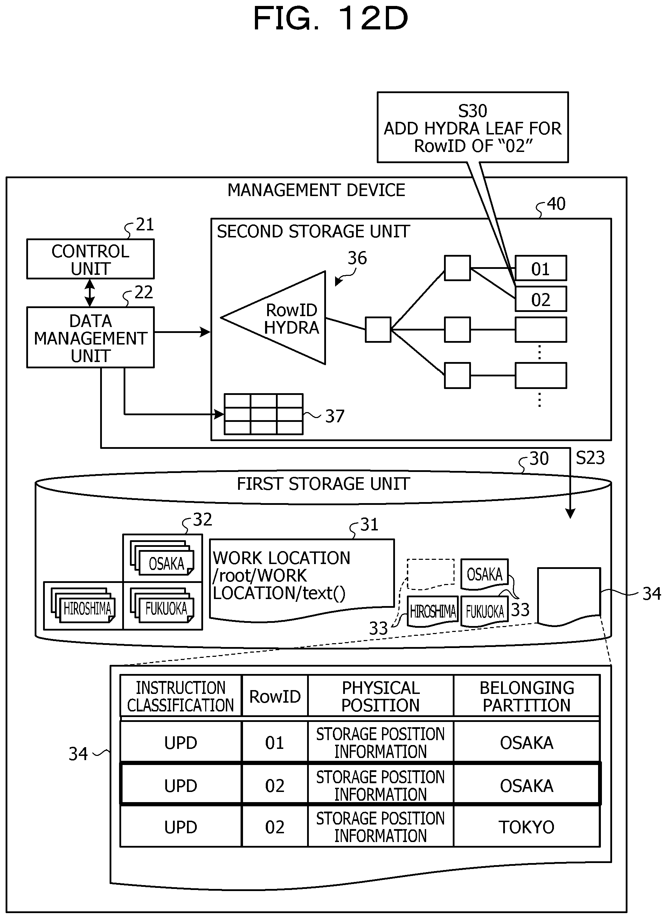

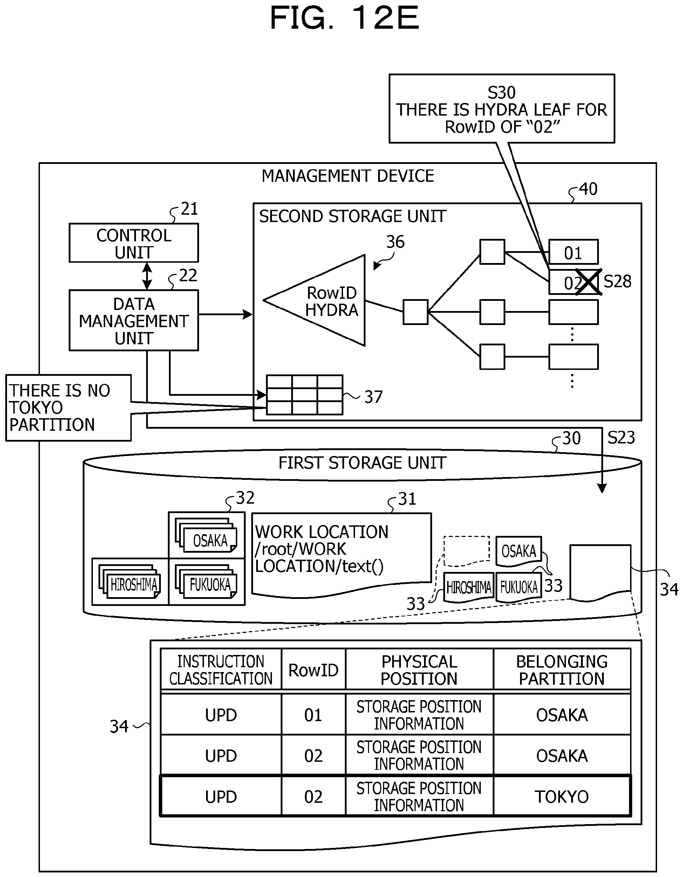

FIGs. 12D and 12E illustrate restoration processing using operation information of an update instruction of the record #2. As illustrated in FIG. 12D, the data management unit 22 reads the common RowID file 34 (Step S23), and performs update processing because the instruction classification of the next piece of the operation information is "UPD". For example, the data management unit 22 adds a RowID hydra leaf for the record with the RowID of "02" because the record has no RowID hydra leaf and has "Osaka" as the belonging partition (Step S30).

Then, as illustrated in FIG. 12E, the data management unit 22 reads the common RowID file 34 (step S23), and performs update processing because the instruction classification of the next operation information is "UPD". For example, the data management unit 22 deletes the RowID hydra leaf for the record with the RowID of "02" because the record has the RowID hydra leaf and does not have "Tokyo" as the belonging partition (Step S30).

As described above, in the embodiment, the addition unit 43a writes the operation information of the addition instruction to the partition-specific RowID file 33, and the update unit 43b and the deletion unit 43c write the operation information of the update instruction and the deletion instruction to the common RowID file 34, respectively. Then, when restoring the RowID hydra 36, the restoration unit 44 performs the processing of reading the partition-specific RowID file 33 and creating the RowID hydra 36 in parallel for each partition. Then, the restoration unit 44 reads the common RowID file 34 and reflects the update instruction and the deletion instruction in the RowID hydra 36. Therefore, the data management unit 22 may shorten the restoration time of the RowID hydra 36 and improve restart performance.

Furthermore, in the embodiment, since the partition deletion unit 43d deletes the partition-specific RowID file 33 corresponding to the partition specified in the partition deletion request, the number of pieces of operation information may be reduced and the restoration time of the RowID hydra 36 may be shortened.

Furthermore, in the embodiment, the operation information of the update instruction includes the belonging partition, and the restoration unit 44 restores the RowID hydra 36 by using the belonging partition. Specifically, in a case where there is a RowID hydra leaf of a record to be updated and there is a partition to which the record to be updated belongs, the restoration unit 44 updates the RowID hydra leaf. In a case where there is the RowID hydra leaf of the record to be updated and there is no partition to which the record to be updated belongs, the restoration unit 44 deletes the RowID hydra leaf from the RowID hydra 36. In a case where there is no RowID hydra leaf of the record to be updated and there is the partition to which the record to be updated belongs, the restoration unit 44 adds a RowID hydra leaf to the RowID hydra 36. In a case where there is no RowID hydra leaf of the record to be updated and there is no partition to which the record to be updated belongs, the restoration unit 44 does not perform processing on the RowID hydra 36. Therefore, even in a case where update accompanied by partition movement or deletion of a partition is performed, the restoration unit 44 may restore the RowID hydra 36 that is consistent with the update or deletion on the basis of the operation information of the update instruction.

Note that, in the embodiment, the management device 2 has been described. However, by implementing the configuration of the management device 2 by software, it is possible to obtain a management program that has a similar function. Therefore, a computer that executes the management program will be described.

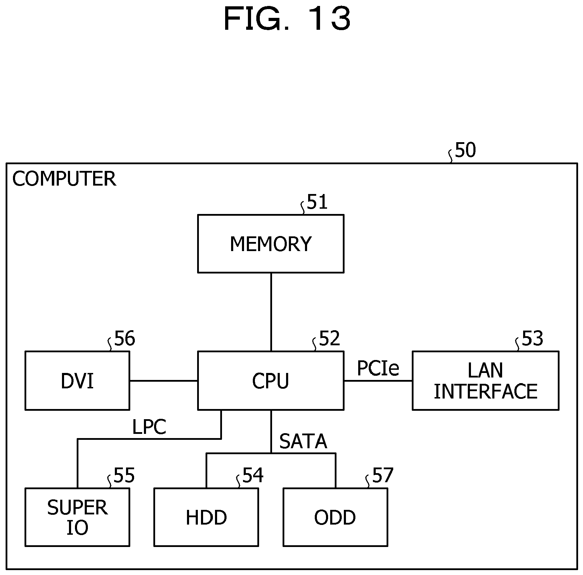

FIG. 13 illustrates a hardware configuration of the computer that executes the management program according to the embodiment. As illustrated in FIG. 13, a computer 50 includes the memory 51, a central processing unit (CPU) 52, a local area network (LAN) interface 53, and a hard disk drive (HDD) 54. Furthermore, the computer 50 includes a super input output (IO) 55, a digital visual interface (DVI) 56, and an optical disk drive (ODD) 57.

The memory 51 is a memory that stores a program, a halfway result of execution of the program, and the like. The CPU 52 is a central processing unit that reads and executes a program from the memory 51. The CPU 52 includes a chipset having a memory controller.

The LAN interface 53 is an interface for connecting the computer 50 to another computer via a LAN. The HDD 54 is a disk device that stores a program and data, and the super IO 55 is an interface for connecting an input device such as a mouse and a keyboard. The DVI 56 is an interface that connects a liquid crystal display device, and the ODD 57 is a device that reads and writes a DVD.

The LAN interface 53 is connected to the CPU 52 by PCI Express (PCIe), and the HDD 54 and the ODD 57 are connected to the CPU 52 by serial advanced technology attachment (SATA). The super IO 55 is connected to the CPU 52 by low pin count (LPC).

Then, the management program executed by the computer 50 is stored in a DVD that is an example of a recording medium that may be read by the computer 50, and is read from the DVD by the ODD 57 to be installed to the computer 50. Alternatively, the management program is stored in a database or the like of another computer system connected via the LAN interface 53 and is read from these databases and is installed to the computer 50. Then, the installed management program is stored in the HDD 54, is read to the memory 51, and is executed by the CPU 52.

Furthermore, in the embodiment, the case of managing XML data has been described. However, the management device 2 may manage another data. Furthermore, in the embodiment, the case of using the RowID hydra 36 has been described. However, the management device 2 may use another data structure as long as the information associates a RowID with a physical position of a record.

### REFERENCE SIGNS LIST

1 Database management system
2 Management device
3 Retrieval device
4 Retrieval expression
9 RowID file
21 Control unit
22 Data management unit
30a, 30 First storage unit
30b, 40 Second storage unit
31 Partition definition
32 Accumulated data
33 Partition-specific RowID file
34 Common RowID file
36 RowID hydra
37 Partition list
43 Operation unit
43a Addition unit
43b Update unit
43c Deletion unit
43d Partition deletion unit
44 Restoration unit
50 Computer
51 Memory
52 CPU
53 LAN interface
54 HDD
55 Super IO
56 DVI
57 ODD

### CITATION LIST

Japanese Laid-open Patent Publication No. 7-73086;
Japanese Laid-open Patent Publication No. 4-24750; and
Japanese Laid-open Patent Publication No. 2003-44267.

## Claims

1. An information processing program comprising instructions which, when the program is executed by a computer (50), cause the computer (50) to perform processing, the processing including:
dividing data (32) into a plurality of partial data (33) to store each of the plurality of partial data (33) into an associated data area among a plurality of data areas (A, B) in a database;
receiving at least one operation of any one of addition, update, and deletion for at least one data area of the plurality of data areas (A, B);
storing, for each of the at least one received operation which is an addition, information regarding the operation of the addition in a data area-specific file associated with the at least one data area in which the at least one addition is performed;
storing, for each of the at least one received operation which is either an update or a deletion, information regarding the operation of the update or the deletion in a common file (34) ;
executing, in response to a database restart, restoration processing related to the additions in parallel for the plurality of data areas (A, B) on the basis of information regarding the addition operations in the respective data area-specific file associated with each of the plurality of data areas (A, B) ; and
executing, after the restoration processing related to the additions, restoration processing related to the updates or the deletions on the basis of the information regarding the operation of the updates or the deletions in the common file (34) .

2. The information processing program according to claim 1, the processing further including: deleting, in response that a certain data area included in the plurality of data areas (A, B) is deleted, information regarding an operation associated with the data area.

3. The information processing program according to claim 1 or 2, wherein
the information regarding the operation of the update includes data area identification information that identifies an updated data area, and
the restoration processing related to the updates uses the data area identification information.

4. The information processing program according to claim 3, wherein the restoration processing related to the updates includes
in a case where storage position information that corresponds to data to be updated is restored in all storage position information,
in response that there is a data area identified by the data area identification information, updating the storage position information, and
in response that there is no data area identified by the data area identification information, deleting the storage position information, and
in a case where data information that corresponds to data to be updated is not restored,
in response that there is a data area identified by the data area identification information, adding the storage position information.

5. A computer-implemented method comprising:
dividing data (32) into a plurality of partial data (33) to store each of the plurality of partial data (33) into an associated data area among a plurality of data areas (A, B) in a database;
receiving at least one operation of any one of addition, update, and deletion for at least one data area of the plurality of data areas (A, B);
storing, for each of the at least one received operation which is an addition, information regarding the operation of the addition in a data area-specific file associated with the at least one data area in which the at least one addition is performed;
storing, for each of the at least one received operation which is either an update or a deletion, information regarding the operation of the update or the deletion in a common file (34) ;
executing, in response to a database restart, restoration processing related to the additions in parallel for the plurality of data areas (A, B) on the basis of information regarding the addition operations in the respective data area-specific file associated with each of the plurality of data areas (A, B) ; and
executing, after the restoration processing related to the additions, restoration processing related to the updates or the deletions on the basis of the information regarding the operation of the updates or the deletions in the common file (34) .

6. The computer-implemented method according to claim 5, further comprising:
deleting, in response that a certain data area included in the plurality of data areas (A, B) is deleted, information regarding an operation associated with the data area.

7. The computer-implemented method according to claim 5, wherein
the information regarding the operation of the update includes data area identification information that identifies an updated data area, and
the restoration processing related to the updates uses the data area identification information.

8. An information processing apparatus (2) comprising:
a database that divides data (32) into a plurality of partial data (33) to store each of the plurality of partial data (33) into an associated data area among a plurality of data areas (A, B) ;
an addition unit (43a) that stores, for each of at least one received operation which is an addition, information regarding the operation of the addition in a data area-specific file associated with the at least one data area in which the at least one addition is performed;
an update deletion unit (43b - 43d) that stores, for each of the at least one received operation which is either an update or a deletion, information regarding the operation of the update or the deletion in a common file (34);
a restoration unit (44) that
executes, in response to a database restart, restoration processing related to the additions in parallel for the plurality of data areas (A, B) on the basis of information regarding the addition operations in the respective data area-specific file associated with each of the plurality of data areas (A, B), and
executes, after the restoration processing related to the additions, restoration processing related to the updates or the deletions on the basis of the information regarding the operation of the updates or the deletions in the common file (34) .

9. The information processing apparatus (2) according to claim 8, further comprising an area deletion unit that deletes, in response that a certain data area included in the plurality of data areas (A, B) is deleted, information regarding an operation associated with the data area.

10. The information processing apparatus (2) according to claim 8 or 9, wherein
the information regarding the operation of the update includes data area identification information that identifies an updated data area, and
the restoration unit (44) executes the restoration processing related to the updates by using the data area identification information.

## Patentansprüche

1. Informationsverarbeitungsprogramm, umfassend Anweisungen, die beim Ausführen des Programms durch einen Computer (50) den Computer (50) veranlassen, eine Verarbeitung durchzuführen, wobei die Verarbeitung einschließt:
Aufteilen von Daten (32) in eine Vielzahl von partiellen Daten (33), um jede der Vielzahl von partiellen Daten (33) in einem zugehörigen Datenbereich aus einer Vielzahl von Datenbereichen (A, B) in einer Datenbank zu speichern;
Empfangen mindestens einer Operation von Hinzufügung, Aktualisierung und Löschung für mindestens einen Datenbereich der Vielzahl von Datenbereichen (A, B);
Speichern, für jede der mindestens einen empfangenen Operation, die eine Hinzufügung ist, von Informationen in Bezug auf die Operation der Hinzufügung in einer datenbereichspezifischen Datei, die zu dem mindestens einen Datenbereich zugehörig ist, in dem die mindestens eine Hinzufügung durchgeführt wird;
Speichern, für jede der mindestens einen empfangenen Operation, die entweder eine Aktualisierung oder eine Löschung ist, von Informationen in Bezug auf die Operation der Aktualisierung oder der Löschung in einer gemeinsamen Datei (34);
Ausführen, als Reaktion auf einen Neustart der Datenbank, einer Wiederherstellungsverarbeitung im Zusammenhang mit den parallelen Hinzufügungen für die Vielzahl von Datenbereichen (A, B) auf der Grundlage von Informationen in Bezug auf die Hinzufügungsoperationen in der jeweiligen datenbereichspezifischen Datei, die zu jedem der Vielzahl von Datenbereichen (A, B) zugehörig ist; und
Ausführen, nach der Wiederherstellungsverarbeitung im Zusammenhang mit den Hinzufügungen, einer Wiederherstellungsverarbeitung im Zusammenhang mit den Aktualisierungen oder den Löschungen auf der Grundlage der Informationen in Bezug auf die Operation der Aktualisierungen oder der Löschungen in der gemeinsamen Datei (34).

2. Informationsverarbeitungsprogramm nach Anspruch 1, wobei die Verarbeitung weiter einschließt: Löschen, als Reaktion auf ein Löschen eines bestimmten Datenbereichs, der in der Vielzahl von Datenbereichen (A, B) eingeschlossen ist, von Informationen in Bezug auf eine zu dem Datenbereich zugehörige Operation.

3. Informationsverarbeitungsprogramm nach Anspruch 1 oder 2, wobei
die Informationen in Bezug auf die Operation der Aktualisierung Datenbereich-Identifikationsinformationen einschließen, die einen aktualisierten Datenbereich identifizieren, und
die Wiederherstellungsverarbeitung im Zusammenhang mit den Aktualisierungen die Datenbereich-Identifikationsinformationen nutzt.

4. Informationsverarbeitungsprogramm nach Anspruch 3, wobei die Wiederherstellungsverarbeitung im Zusammenhang mit den Aktualisierungen einschließt:
in einem Fall, in dem Speicherpositionsinformationen, die zu aktualisierenden Daten entsprechen, in allen Speicherpositionsinformationen wiederhergestellt werden,
als Reaktion darauf, dass ein durch die Datenbereich-Identifikationsinformationen identifizierter Datenbereich vorliegt, Aktualisieren der Speicherpositionsinformationen, und
als Reaktion darauf, dass kein durch die Datenbereich-Identifikationsinformationen identifizierter Datenbereich vorliegt, Löschen der Speicherpositionsinformationen, und
in einem Fall, in dem Dateninformationen, die zu aktualisierenden Daten entsprechen, nicht wiederhergestellt werden,
als Reaktion darauf, dass durch die Datenbereich-Identifikationsinformationen identifizierte Daten vorliegen, Hinzufügen der Speicherpositionsinformationen.

5. Computerimplementiertes Verfahren, umfassend:
Aufteilen von Daten (32) in eine Vielzahl von partiellen Daten (33), um jede der Vielzahl von partiellen Daten (33) in einem zugehörigen Datenbereich aus einer Vielzahl von Datenbereichen (A, B) in einer Datenbank zu speichern;
Empfangen mindestens einer Operation von Hinzufügung, Aktualisierung und Löschung für mindestens einen Datenbereich der Vielzahl von Datenbereichen (A, B);
Speichern, für jede der mindestens einen empfangenen Operation, die eine Hinzufügung ist, von Informationen in Bezug auf die Operation der Hinzufügung in einer datenbereichspezifischen Datei, die zu dem mindestens einen Datenbereich zugehörig ist, in dem die mindestens eine Hinzufügung durchgeführt wird;
Speichern, für jede der mindestens einen empfangenen Operation, die entweder eine Aktualisierung oder eine Löschung ist, von Informationen in Bezug auf die Operation der Aktualisierung oder der Löschung in einer gemeinsamen Datei (34);
Ausführen, als Reaktion auf einen Neustart der Datenbank, einer Wiederherstellungsverarbeitung im Zusammenhang mit den parallelen Hinzufügungen für die Vielzahl von Datenbereichen (A, B) auf der Grundlage von Informationen in Bezug auf die Hinzufügungsoperationen in der jeweiligen datenbereichspezifischen Datei, die zu jedem der Vielzahl von Datenbereichen (A, B) zugehörig ist; und
Ausführen, nach der Wiederherstellungsverarbeitung im Zusammenhang mit den Hinzufügungen, einer Wiederherstellungsverarbeitung im Zusammenhang mit den Aktualisierungen oder den Löschungen auf der Grundlage der Informationen in Bezug auf die Operation der Aktualisierungen oder der Löschungen in der gemeinsamen Datei (34).

6. Computerimplementiertes Verfahren nach Anspruch 5, weiter umfassend:
Löschen, als Reaktion auf ein Löschen eines bestimmten Datenbereichs, der in der Vielzahl von Datenbereichen (A, B) eingeschlossen ist, von Informationen in Bezug auf eine zu dem Datenbereich zugehörige Operation.

7. Computerimplementiertes Verfahren nach Anspruch 5, wobei
die Informationen in Bezug auf die Operation der Aktualisierung Datenbereich-Identifikationsinformationen einschließen, die einen aktualisierten Datenbereich identifizieren, und
die Wiederherstellungsverarbeitung im Zusammenhang mit den Aktualisierungen die Datenbereich-Identifikationsinformationen nutzt.

8. Informationsverarbeitungsvorrichtung (2), umfassend: eine Datenbank, die Daten (32) in eine Vielzahl von partiellen Daten (33) aufteilt, um jede der Vielzahl von partiellen Daten (33) in einem zugehörigen Datenbereich aus einer Vielzahl von Datenbereichen (A, B) zu speichern;
eine Hinzufügungseinheit (43a), die für jede mindestens einer empfangenen Operation, die eine Hinzufügung ist, Informationen in Bezug auf die Operation der Hinzufügung in einer datenbereichspezifischen Datei speichert, die zu dem mindestens einen Datenbereich zugehörig ist, in dem die mindestens eine Hinzufügung durchgeführt wird;
eine Aktualisierungs-Löschungseinheit (43b - 43d), die für jede der mindestens einen empfangenen Operation, die entweder eine Aktualisierung oder eine Löschung ist, Informationen in Bezug auf die Operation der Aktualisierung oder der Löschung in einer gemeinsamen Datei (34) speichert;
eine Wiederherstellungseinheit (44), die
als Reaktion auf einen Neustart der Datenbank eine Wiederherstellungsverarbeitung im Zusammenhang mit den parallelen Hinzufügungen für die Vielzahl von Datenbereichen (A, B) auf der Grundlage von Informationen in Bezug auf die Hinzufügungsoperationen in der jeweiligen datenbereichspezifischen Datei ausführt, die zu jedem der Vielzahl von Datenbereichen (A, B) zugehörig ist, und
nach der Wiederherstellungsverarbeitung im Zusammenhang mit den Hinzufügungen eine Wiederherstellungsverarbeitung im Zusammenhang mit den Aktualisierungen oder den Löschungen auf der Grundlage der Informationen in Bezug auf die Operation der Aktualisierungen oder der Löschungen in der gemeinsamen Datei (34) ausführt.

9. Informationsverarbeitungsvorrichtung (2) nach Anspruch 8, weiter umfassend eine Bereichlöschungseinheit, die als Reaktion auf ein Löschen eines bestimmten Datenbereichs, der in der Vielzahl von Datenbereichen (A, B) eingeschlossen ist, Informationen in Bezug auf eine zu dem Datenbereich zugehörige Operation löscht.

10. Informationsverarbeitungsvorrichtung (2) nach Anspruch 8 oder 9, wobei
die Informationen in Bezug auf die Operation der Aktualisierung Datenbereich-Identifikationsinformationen einschließen, die einen aktualisierten Datenbereich identifizieren, und
die Wiederherstellungseinheit (44) die Wiederherstellungsverarbeitung im Zusammenhang mit den Aktualisierungen durch Nutzung der Datenbereich-Identifikationsinformationen ausführt.

## Revendications

1. Programme de traitement d'informations comprenant des instructions qui, lorsque le programme est exécuté par un ordinateur (50), amènent l'ordinateur (50) à mettre en oeuvre un traitement, le traitement incluant :
diviser des données (32) en une pluralité de données partielles (33) pour stocker chacune parmi la pluralité de données partielles (33) dans une zone de données associée parmi une pluralité de zones de données (A, B) dans une base de données ;
recevoir au moins une opération parmi l'une quelconque parmi l'ajout, la mise à jour et la suppression pour au moins une zone de données parmi la pluralité de zones de données (A, B) ;
stocker, pour chacune de l'au moins une opération reçue qui est un ajout, des informations relatives à l'opération de l'ajout dans un fichier spécifique à la zone de données associé à l'au moins une zone de données dans laquelle le au moins un ajout est mis en oeuvre ;
stocker, pour chacune de l'au moins une opération reçue qui est soit une mise à jour soit une suppression, des informations relatives à l'opération de la mise à jour ou de la suppression dans un fichier commun (34) ;
exécuter, en réponse à un redémarrage de la base de données, un traitement de restauration lié aux ajouts en parallèle pour la pluralité de zones de données (A, B) sur la base d'informations relatives aux opérations d'ajout dans le fichier spécifique à la zone de données respectif associé à chacune parmi la pluralité de zones de données (A, B) ; et
exécuter, après le traitement de restauration lié aux ajouts, un traitement de restauration lié aux mises à jour ou aux suppressions sur la base des informations relatives à l'opération des mises à jour ou des suppressions dans le fichier commun (34).

2. Programme de traitement d'informations selon la revendication 1, le traitement incluant en outre : supprimer, en réponse à la suppression d'une certaine zone de données incluse dans la pluralité de zones de données (A, B), d'informations relatives à une opération associée à la zone de données.

3. Programme de traitement d'informations selon la revendication 1 ou la revendication 2, dans lequel
les informations relatives à l'opération de la mise à jour incluent des informations d'identification de zone de données qui identifient une zone de données mise à jour, et
le traitement de restauration lié aux mises à jour utilise les informations d'identification de zone de données.

4. Programme de traitement d'informations selon la revendication 3, dans lequel le traitement de restauration lié aux mises à jour inclut
dans un cas où des informations de position de stockage qui correspondent à des données à mettre à jour sont restaurées dans toutes les informations de position de stockage,
en réponse à l'existence d'une zone de données identifiée par les informations d'identification de zone de données, mettre à jour les informations de position de stockage, et
en réponse à l'absence d'une zone de données identifiée par les informations d'identification de zone de données, supprimer les informations de position de stockage, et
dans un cas où des informations de données qui correspondent à des données à mettre à jour ne sont pas restaurées,
en réponse à l'existence d'une zone de données identifiée par les informations d'identification de zone de données, ajouter les informations de position de stockage.

5. Procédé exécuté par un ordinateur comprenant :
diviser des données (32) en une pluralité de données partielles (33) pour stocker chacune parmi la pluralité de données partielles (33) dans une zone de données associée parmi une pluralité de zones de données (A, B) dans une base de données ;
recevoir au moins une opération parmi l'une quelconque parmi l'ajout, la mise à jour et la suppression pour au moins une zone de données parmi la pluralité de zones de données (A, B) ;
stocker, pour chacune de l'au moins une opération reçue qui est un ajout, des informations relatives à l'opération de l'ajout dans un fichier spécifique à la zone de données associé à l'au moins une zone de données dans laquelle le au moins un ajout est mis en oeuvre ;
stocker, pour chacune de l'au moins une opération reçue qui est soit une mise à jour soit une suppression, des informations relatives à l'opération de la mise à jour ou de la suppression dans un fichier commun (34) ;
exécuter, en réponse à un redémarrage de la base de données, un traitement de restauration lié aux ajouts en parallèle pour la pluralité de zones de données (A, B) sur la base d'informations relatives aux opérations d'ajout dans le fichier spécifique à la zone de données respectif associé à chacune parmi la pluralité de zones de données (A, B) ; et
exécuter, après le traitement de restauration lié aux ajouts, un traitement de restauration lié aux mises à jour ou aux suppressions sur la base des informations relatives à l'opération des mises à jour ou des suppressions dans le fichier commun (34).

6. Procédé exécuté par un ordinateur selon la revendication 5, comprenant en outre
supprimer, en réponse à la suppression d'une certaine zone de données incluse dans la pluralité de zones de données (A, B), d'informations relatives à une opération associée à la zone de données.

7. Procédé exécuté par un ordinateur selon la revendication 5, dans lequel
les informations relatives à l'opération de mise à jour incluent des informations d'identification de zone de données qui identifient une zone de données mise à jour, et
le traitement de restauration lié aux mises à jour utilise les informations d'identification de zone de données.

8. Appareil de traitement d'informations (2) comprenant : une base de données qui divise des données (32) en une pluralité de données partielles (33) pour stocker chacune parmi la pluralité de données partielles (33) dans une zone de données associée parmi une pluralité de zones de données (A, B) ;
une unité d'ajout (43a) qui stocke, pour chacune d'au moins une opération reçue qui est un ajout, des informations relatives à l'opération de l'ajout dans un fichier spécifique à la zone de données associé à l'au moins une zone de données dans laquelle l'au moins un ajout est mis en oeuvre ;
une unité de mise à jour et suppression (43b - 43d) qui stocke, pour chacune de l'au moins une opération reçue qui est soit une mise à jour soit une suppression, des informations relatives à l'opération de la mise à jour ou de la suppression dans un fichier commun (34) ;
une unité de restauration (44) qui
exécute, en réponse à un redémarrage de la base de données, un traitement de restauration lié aux ajouts en parallèle pour la pluralité de zones de données (A, B) sur la base d'informations relatives aux opérations d'ajout dans le fichier respectif spécifique à la zone de données associé à chacune parmi la pluralité de zones de données (A, B), et
exécute, après le traitement de restauration lié aux ajouts, un traitement de restauration lié aux mises à jour ou aux suppressions sur la base des informations relatives à l'opération des mises à jour ou des suppressions dans le fichier commun (34).

9. Appareil de traitement d'informations (2) selon la revendication 8, comprenant en outre une unité de suppression de zone qui supprime, en réponse à la suppression d'une certaine zone de données incluse dans la pluralité de zones de données (A, B), des informations relatives à une opération associée à la zone de données.

10. Appareil de traitement d'informations (2) selon la revendication 8 ou la revendication 9, dans lequel
les informations relatives à l'opération de la mise à jour incluent des informations d'identification de zone de données qui identifient une zone de données mise à jour, et
l'unité de restauration (44) exécute le traitement de restauration lié aux mises à jour en utilisant les informations d'identification de zone de données.
